**Europäisches Patentamt**

**European Patent Office**

**Office européen des brevets**

(11) Veröffentlichungsnummer: **0 012 848**
**B1**

(12) ## EUROPÄISCHE PATENTSCHRIFT

(45) Veröffentlichungstag der Patentschrift:
**10.02.82**

(51) Int. Cl.³: **B 29 C 27/10**, B 32 B 31/04,
B 30 B 13/00

(21) Anmeldenummer: **79104627.9**

(22) Anmeldetag: **21.11.79**

(54) Verfahren zur Herstellung einer Klebeverbindung zwischen Teilen aus weichem Material.

(30) Priorität: **21.12.78 DE 2855242**

(43) Veröffentlichungstag der Anmeldung:
**09.07.80 Patentblatt 80/14**

(45) Bekanntmachung des Hinweises auf die Patenterteilung:
**10.02.82 Patentblatt 82/6**

(84) Benannte Vertragsstaaten:
**AT BE CH FR GB IT NL SE**

(56) Entgegenhaltungen:
**DE-A-1 965 521**
**DE-B-1 183 353**
**FR-A-2 205 439**
**FR-A-2 284 444**
**GB-A-399 578**
**GB-A-488 315**
**GB-A-1 035 360**
**NL-C-98 050**
**US-A-2 416 137**
**US-A-2 636 539**
**US-A-2 935 116**
**US-A-2 975 476**
**US-A-3 405 019**
**US-A-3 553 054**
**US-A-3 818 823**
**US-A-3 967 996**

(73) Patentinhaber: **METZELER SCHAUM GMBH,**
**Donaustrasse 51, D-8940 Memmingen (DE)**

(72) Erfinder: **Bokelmann, Horst, Richard-Kirchner-Strasse 24,**
**D-3590 Bad Wildungen (DE)**
Erfinder: **Patzelt, Heinz Wolfgang, Dr., Buxacher**
**Strasse 73, D-8940 Memmingen (DE)**

(74) Vertreter: **Michelis, Theodor, Dipl.-Ing.,**
**Westendstrasse 131, D-8000 München 2 (DE)**

Verfahren zur Herstellung einer Klebeverbindung zwischen Teilen aus weichem Material

Die Erfindung betrifft ein Verfahren zur Herstellung einer Klebeverbindung unter Druck zwischen Teilen aus weichem Material, insbesondere geschäumtem Kunststoff, unter Verwendung eines Klebers, der zwischen die Berührungsflächen der miteinander zu verbindenden Teile eingebracht wird, wobei die aus den miteinander zu verbindenden Teilen zusammengesetzte Einheit mit Hilfe einer luftdichten, weichen Folie abgedeckt und der mittels der Folie geschaffene, die Einheit enthaltende Raum einem Unterdruck ausgesetzt wird.

Ein derartiges Verfahren ist beispielsweise aus der AT-B 211 505 bekannt. Danach wird ein mit einer Schaumkunststoffauflage versehener Schalenkörper eines Sessels zum Überziehen mit einer Gewebestoffhülle mit Hilfe einer luftdichten, weichen Folie abgedeckt und der hierdurch geschaffene Raum innerhalb der Folie einem Unterdruck ausgesetzt.

Darüber hinaus ist es aus der DE-A-1 965 521 bekannt, dieses Verfahren zum Verbinden von Materialbahnen aus Schaumstoffen zu verwenden.

Schwierigkeiten ergeben sich jedoch, wenn höhere Presskräfte auf zu verklebende Schaumstoffteile mit sehr unregelmässiger und stark zerklüfteter Oberfläche aufgebracht werden müssen, wie beispielsweise bei einem Sofa, bei dem sowohl Rücken- als auch Armlehnenteile mit dem Sitzteil fest verbunden werden sollen. Aufgabe der vorliegenden Erfindung ist es daher, ein Verfahren zu schaffen, mit dem mittels des Vakuumpressverfahrens auch Teile mit sehr unregelmässiger Oberfläche auf einfache Weise gleichmässig und sicher verklebt werden können.

Ausgehend von einem Verfahren der eingangs genannten Art ist zur Lösung der gestellten Aufgabe erfindungsgemäss vorgesehen, dass die aus den zu verbindenden Teilen gebildete Einheit vor dem Abdecken durch die luftdichte Folie mittels entsprechend geformter Formteile, die auf die Oberfläche der Einheit aufgesetzt werden, zu einer regelmässigen, geometrischen Form, z.B. im Querschnitt einem Rechteck, ergänzt werden.

Durch diese Ergänzung zu einem gleichmässigen geometrischen Körper wird dann bei Evakuierung des Raums unter der darübergezogenen Folie ein Druck mit gleichmässiger Flächenpressung auf die zu verbindenden Abschnitte aufgebracht, so dass damit eine sichere Verklebung aller Bereiche gewährleistet ist.

In Weiterbildung der Erfindung wird die aus den zu verbindenden Teilen und den Formteilen zusammengesetzte Einheit auf einen Vakuumtisch abgestellt und anschliessend über die Einheit und den Rand des Tisches die Folie gezogen und der Raum unter der Folie evakuiert.

Anhand einer schematischen Zeichnung sind Aufbau und Wirkungsweise eines Anwendungsbeispiels für das erfindungsgemässe Verfahren schematisch dargestellt. Dabei zeigen

Fig. 1 einen Querschnitt durch ein aus mehreren miteinander zu verklebenden Teilen aufgebautes Sofa bei Anwendung des Verfahrens und

Fig. 2 einen Querschnitt durch ein zu verwendendes Formteil für die Ergänzung zu einer regelmässigen geometrischen Form

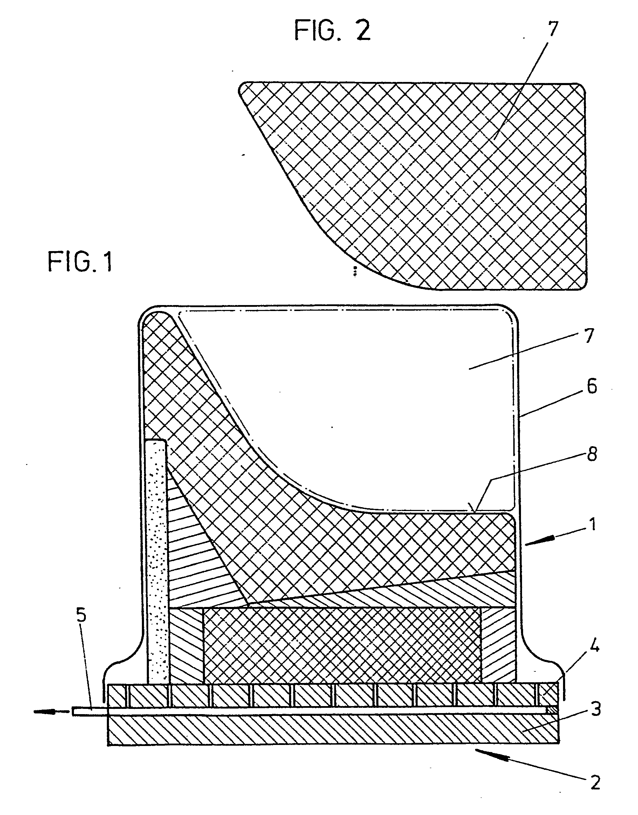

Es ist angenommen, dass ein (2-sitziges) Sofa, welches in der Fig. 1 geschnitten dargestellt ist, zusammengesetzt werden soll, und zwar aus insgesamt 7 unterschiedlichen Schaumstoffteilen, wobei die einzelnen Berührungsflächen miteinander verklebt werden müssen. Hierzu werden die einzelnen Teile an den Berührungsflächen mit einem entsprechenden Kleber bestrichen. Anschliessend wird die Einheit zusammengesetzt und auf einem Vakuumtisch 2 abgestellt. Dieser Tisch besitzt eine 2-teilige Platte, und zwar eine durchgehende, feste Grundplatte 3 sowie eine mit Kanälen und Perforationsöffnungen versehene Platte 4, wobei die Perforationen an der Oberseite austreten, auf welcher die zu verklebende Einheit aufgestellt ist. Die Kanäle der oberen Platte 4 führen zu einer in der Zeichnung nicht dargestellten Vakuumanlage über einen Anschlussstutzen 5.

Zur Herstellung des Druckes wird über die zusammenzusetzende Einheit 1 bis an den Tischrand eine luftundurchlässige Folie 6 gezogen. Anschliessend wird die Luft aus dem Innenraum abgesaugt, so dass sich die Folie 6 ganz eng an die Oberfläche 8 der zu fertigenden Einheit anlegt und bei der weiteren Evakuierung den gewünschten Druck ausübt, wobei dieser Druck elastisch auf die einzelnen Klebeflächen weitergegeben wird, und zwar über die gesamte Einheit in gleicher Stärke.

Gemäss dem Erfindungsgedanken ist ein zusätzliches Formteil 7 (Fig. 2) vorgesehen, das ohne Klebeverbindung auf die zu fertigende Einheit so aufgesetzt wird, dass die Einheit zu einem regelmässigen Körper, z.B. im Querschnitt einem Rechteck, ergänzt wird. Das Formteil 7 wird, ohne dass die Begrenzungsfläche zur Oberfläche 8 des im Schnitt dargestellten Sofas mit einem Kleber versehen wird, so aufgesetzt, dass insgesamt ein rechteckiger Querschnitt dieses Teiles entsteht, so dass der Druck nur im wesentlichen auf die geradlinigen Oberflächen dieses Körpers gleichmässig ausgeübt wird.

Die Erfindung wurde anhand eines Ausführungsbeispiels erläutert. Es ist ersichtlich, dass das Verfahren auch mit anders ausgebildeten Vorrichtungen, als beschrieben, realisiert werden kann. So ist es beispielsweise bei einfachen zusammengesetzten Körpern durchaus möglich, die Wirkung des Zusammenpressens über eine einfache Kunststofftüte mit einem an eine Vakuumanlage angeschlossenen Ventil zu erzeugen, ohne dass ein besonderer «Vakuumtisch» vorgesehen werden müsste.

**Patentansprüche**

1. Verfahren zur Herstellung einer Klebeverbindung unter Druck zwischen Teilen aus einem weichen Material, insbesondere geschäumtem Kunststoff, unter Verwendung eines Klebers, der zwischen die Berührungsflächen der miteinander zu verbindenden Teile eingebracht wird, wobei die aus den miteinander zu verbindenden Teilen zusammengesetzte Einheit (1) mit Hilfe einer luftdichten, weichen Folie (6) abgedeckt und der mittels der Folie (6) geschaffene, die Einheit (1) enthaltene Raum einem Unterdruck ausgesetzt wird, dadurch gekennzeichnet, dass die aus den zu verbindenden Teilen gebildete Einheit (1) vor dem Abdecken durch die luftdichte Folie (6) mittels entsprechend geformter Formteile (7), die auf die Oberfläche (8) der Einheit (1) aufgesetzt werden, zu einer regelmässigen geometrischen Form, z.B. im Querschnitt einem Rechteck, ergänzt werden.

2. Verfahren nach Anspruch 1, dadurch gekennzeichnet, dass die aus den zu verbindenden Teilen und den Formteilen (7) zusammengesetzte Einheit (1) auf einem Vakuumtisch (2) abgestellt wird, dass anschliessend über die Einheit (1) und den Rand des Tisches (2) die Folie (6) gezogen und der Raum unter der Folie (6) evakuiert wird.

**Revendications**

1. Procédé de préparation d'une liaison par collage sous pression entre deux pièces en un matériau mou, notamment en matière plastique mousse, en utilisant une colle qui est déposée entre les faces en contact des pièces à relier l'une à l'autre, l'unité (1) constituée des pièces à relier l'une à l'autre étant recouverte d'une feuille (6) molle étanche à l'air et l'espace contenant l'unité (1) et ménagé par la feuille (6) étant mis en dépression, caractérisé en ce qu'il consiste à compléter, avant de recouvrir par la feuille (6) étanche à l'air, l'unité (1) constituée des pièces à relier à une forme géométrique régulière, par exemple un triangle en section droite, à l'aide de pièces (7) de moule conformées en conséquence qui sont posées sur la face (8) supérieure de l'unité (1).

2. Procédé suivant la revendication 1, caractérisé en ce qu'il consiste à poser l'unité (1) constituée des pièces à relier et des pièces (7) de moule sur une table (2) à vide, à tirer ensuite la feuille (6) sur l'unité (1) et sur le bord de la table (2) et à faire le vide dans l'espace sous la feuille (6).

**Claims**

1. A method of producing a pressurised adhesive join between parts made of a flexible material, in particular foam, using an adhesive which is introduced between the contact surfaces of the parts to be joined together, the unit (1) composed of the parts to be joined together being covered by an air-tight, flexible film (6) and the space which is produced by the film (6) and contains the unit (1) being exposed to a low pressure, characterised in that the unit (1) formed from the parts to be joined together is made up into a regular geometrical shape, e.g. a rectangle in cross-section, by means of correspondingly moulded parts (7) which are positioned on the surface (8) of the unit (1), before the unit (1) is covered by the air-tight film (6).

2. A method according to claim 1, characterised in that the unit (1) composed of the parts to be joined together and the mouldings (7) is deposited on a vacuum table (2), that the film (6) is then drawn over the unit (1) and over the edge of the table (2) and the space under the film (6) is evacuated.

FIG. 2

FIG. 1